# FASCICULE DE BREVET EUROPEEN

(11) **EP 1 181 663 B1**
(45) Date de publication et mention de la délivrance du brevet: **12.03.2003**
(21) Numéro de dépôt: 00927338.4
(22) Date de dépôt: 12.05.2000
(51) Int. Cl.: G06K 7/00

(54) **LECTEUR PORTATIF DE MODULES AU FORMAT MINI-CARTE POUR UNE CONNEXION A UN PORT D'UN ORDINATEUR PERSONNEL**
TRAGBARES LESEGERÄT FÜR MINICHIPKARTENFÖRMIGE MODULE ZUM ANSCHLUSS AN EINEN PC
PORTABLE MINI-CARD SIZED MODULE READER FOR CONNECTION TO THE PORT OF A PERSONAL COMPUTER

(30) Priorité: 12.05.1999 FR 9906122
(43) Date de publication de la demande: 27.02.2002
(73) Titulaire: SCHLUMBERGER Systèmes, 92120 Montrouge (FR)
(72) Inventeur: MONTGOMERY, Michael, Cedar Park, TX 78613 (US); SION, Jérôme, F-75007 Paris (FR); PERRIN, Jean-Claude, F-92210 St Cloud (FR)
(74) Mandataire: den Braber, Gerard Paul
(86) Numéro de dépôt international: FR0001300
(87) Numéro de publication internationale: WO00070533

(56) Documents cités:
- EP-A- 0 830 000
- EP-A- 0 883 083
- US-A- 2 802 188
- US-A- 5 276 317

## Description

L'invention concerne des lecteurs portatifs et, en particulier, des lecteurs portatifs de modules au format mini-carte tel que défini en annexe A de la norme ETSI/GSM 11.11 dans sa version 5.3.0 de juillet 1996.

De tels modules sont essentiellement utilisés en téléphonie mobile pour identifier leur porteur auprès d'un opérateur gestionnaire d'un réseau de télécommunications du type GSM (Global System for Mobile communications). Toutefois, ces modules sont en outre aptes à remplir de nombreuses autres fonctions. En effet, dans des développements récents, les modules comportent des programmes applicatifs, notamment rédigés dans des langages informatiques de haut niveau, qui leur permettent, dans le cadre d'une connexion à un réseau de télécommunications, d'assurer des transactions électroniques, d'assurer l'exécution de jeux voire même la mise en oeuvre de fonctions de messagerie. Bien entendu, compte tenu des faibles capacités mémoire et de vitesse de traitement de ces modules, ces programmes sont limités en taille mémoire et dans leur vitesse d'exécution. Toutefois, les modules sont sécurisés, portatifs et peu coûteux et présentent de ce fait un grand intérêt. EP - A - 883 083 décrit une mémoire "memory stick" ou la mémoire est mise en place de façon pas séparable. En effet, ce document ne décrit pas un lecteur. US 5 276 317 décrit un objet pour garder des modules SIM, par exemple associé à un porte-clés. Le document ne fait pas mention d'un lecteur à connexion électrique à un port d'un ordinateur.

On sait que la sécurité des systèmes informatiques complexes n'est pas possible de manière simple. Lorsqu'un ordinateur du type ordinateur personnel est connecté à un réseau informatique, il est possible, à un tiers qui se serait introduit dans ce réseau, d'accéder frauduleusement à des données confidentielles mémorisées au sein dudit ordinateur et, si différentes solutions ont effectivement été envisagées pour une protection de ces données, aucune n'est complètement satisfaisante.

Par ailleurs, on sait que les utilisateurs de systèmes informatiques du type précité ont de plus en plus d'informations confidentielles personnelles à retenir et à gérer. Il s'agit, par exemple, de mots de passe les identifiant personnellement. Bien souvent, ces mots de passe sont changés périodiquement et il devient difficile, pour un utilisateur personne physique, de conserver, dans un endroit sécurisé, de nombreuses informations confidentielles personnelles.

Enfin, on constate que de plus en plus de passerelles sont mises en place entre les différents réseaux. Notamment, de telles passerelles sont mises en place entre des réseaux informatiques internes à une société et des réseaux publics du type internet, ou même entre des réseaux de télécommunications et de tels réseaux publics. Aussi, il devient pratiquement possible d'accéder à un réseau second à partir d'un réseau premier via de telles passerelles et le besoin se fait sentir, pour un utilisateur d'une pluralité de réseaux, de disposer des données utiles à chacun desdits réseaux, quel que soit le point d'entrée choisi.

Compte tenu de ce qui précède, un problème que se propose de résoudre l'invention a trait à des moyens permettant une gestion pratique et entièrement sécurisée de données notamment personnelles destinées à être utilisées au sein de systèmes informatiques. La présente invention est telle que définie dans les revendications dont les préambules sont constitués par les caractéristiques décrites ci-dessus.

Ainsi, le lecteur, dont les dimensions sont réduites, peut être connecté à un port adéquat d'un ordinateur, déconnecté de celui-ci et transporté avec son module et les données confidentielles qu'il comporte. Le module lui-même peut être retiré du lecteur et enfiché dans un autre dispositif par exemple un téléphone mobile où les données confidentielles qu'il comporte peuvent être utilisées.

Par ailleurs, la solution proposée de l'invention au problème précité a pour second objet un procédé de gestion de données confidentielles mémorisées dans une mémoire sécurisée d'un module comprenant, d'une part, un corps de module plastique sensiblement parallélépipédique et rectangle dont les dimensions sont de l'ordre de 25 mm de longueur, 15 mm de largeur et 0,76 mm d'épaisseur et, d'autre part, une puce à circuit intégré munie de plots de contact connectés électriquement à des plages de contact affleurantes à l'une des faces dudit module, selon lequel :
- le module est inséré de manière amovible dans une partie d'insertion d'un lecteur portatif comportant une partie de connexion électrique à un port d'un ordinateur, ladite partie montrant quatre lignes conductrices, de manière que des pattes d'un connecteur de ladite partie d'insertion, qui sont électriquement connectées aux lignes conductrices, soient électriquement connectées aux plages de contact dudit module ;
- un utilisateur connecte le lecteur à un port d'un premier ordinateur ;
- des données sont échangées entre la puce du module et ledit premier ordinateur ;
- l'utilisateur déconnecte le lecteur du port du premier ordinateur ;
- l'utilisateur emporte le lecteur avec lui ;
- l'utilisateur connecteur le lecteur à un port d'un second ordinateur. Dans un premier mode de mise en oeuvre de ce procédé, le premier et le second ordinateur sont un seul et même ordinateur. Dans un second mode de mise en oeuvre, le premier ordinateur est différent du second ordinateur. D'autre part, de manière avantageuse, les données sont échangées via un système de bus USB et l'utilisateur retire le module du lecteur et l'insère dans un téléphone mobile.

La description qui va suivre, et qui ne présente aucun caractère limitatif, permettra de mieux comprendre la manière dont l'invention peut être mise en oeuvre. Elle est rédigée au regard des dessins annexés dans lesquels :
la figure 1 illustre, en perspective, les différentes étapes qui conduisent à l'utilisation d'un lecteur selon l'invention ;
la figure 2 montre, en perspective, des moyens d'insertion amovible d'un lecteur selon l'invention ;
la figure 3 illustre, de manière schématique, différentes lignes de connexion électrique au sein d'un lecteur selon l'invention ;
les figures 4A et 4B montrent, respectivement en coupe longitudinale et en vue de face, un port USB d'un ordinateur personnel ;
les figures 5A et 5B montrent, respectivement en coupe longitudinale et en vue de face, une partie de connexion d'un lecteur selon l'invention à un port USB du type de celui montré aux figures 4A et 4B ; et
la figure 6 montre, en coupe transversale, les moyens de connexion d'un lecteur selon l'invention à un port d'un ordinateur personnel.

L'invention a trait à un lecteur 1 portatif.

Un tel lecteur 1 a un poids de l'ordre de quelques grammes. Il s'inscrit dans un parallélépipède rectangle dont les dimensions, longueur, largeur et épaisseur, sont respectivement de l'ordre de 5, 3 et 2 cm. Aussi, un lecteur 1 selon l'invention peut être associé à un porte-clés et/ou être transporté dans une poche de son titulaire.

Le lecteur 1 comporte une partie de connexion électrique 2 à un port 3 d'un ordinateur personnel ou de tout autre matériel informatique de traitement de données ainsi qu'une partie d'insertion 4 d'un module 5 électronique amovible.

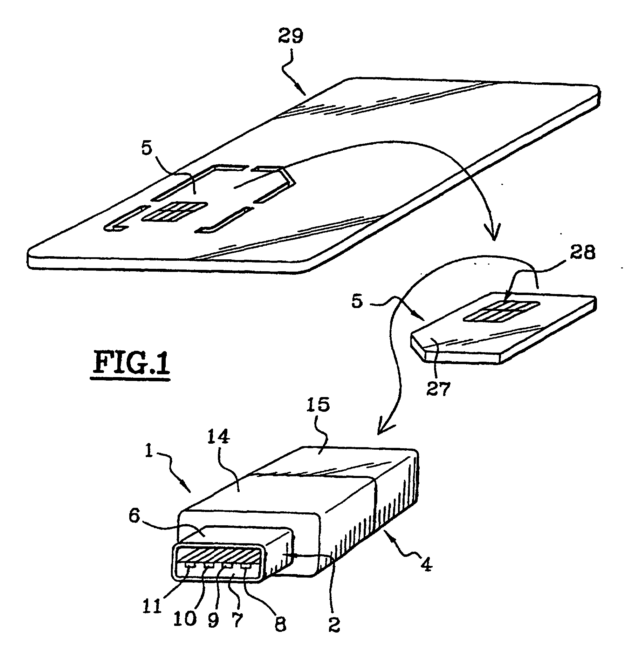

La partie de connexion électrique 2, plus particulièrement montrée aux figures 1, 2, 5A et 5B, présente un embout 6 plastique de section rectangulaire dont l'extrémité ouverte présente un élément 7 plastique de support à la surface de laquelle affleurent quatre lignes métallisées parallèles, et quatre lignes uniquement, formant un connecteur pour une connexion électrique du lecteur 1 au port 3. Ces lignes sont placées sensiblement à mi-hauteur dans l'embout 6. Une première ligne 8 est destinée à une alimentation en courant Vbus du lecteur, une seconde 9 et une troisième 10 lignes sont destinées à une communications de données numériques audit lecteur 1 et une quatrième ligne 11 est destinée à une mise à la masse de ce lecteur 1. Dans la norme USB (Universal Serial Bus), version 1.1 du 23 septembre 1998, qui décrit une telle partie de connexion, et dont le contenu est intégré à la présente description, par citation de référence, la ligne 9 est une ligne D- et la ligne 10 est une ligne D+, D- et D+ désignant des signaux de données définis dans ladite norme.

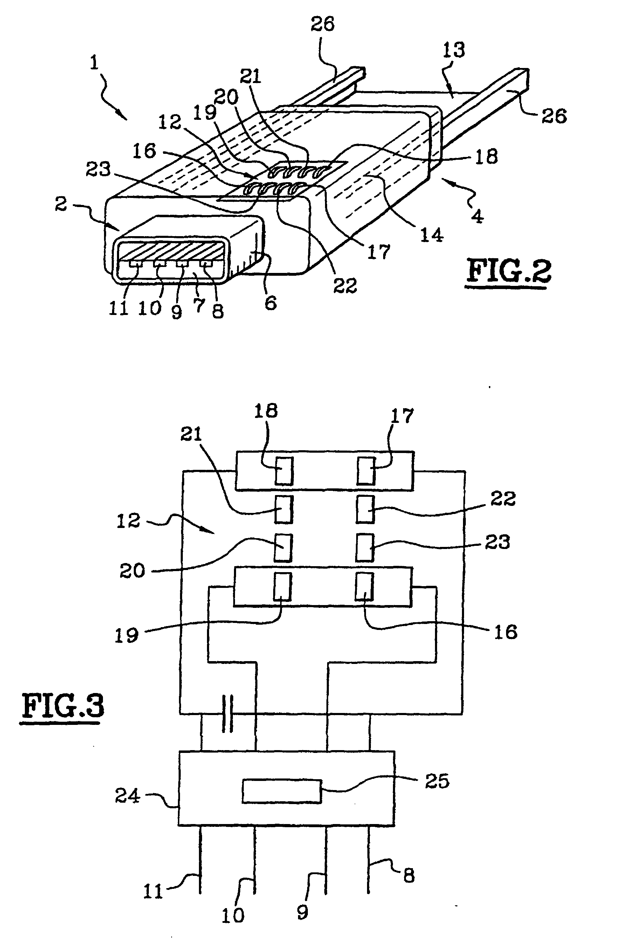

La partie d'insertion 4 est plus particulièrement montrée à la figure 2. Elle présente un connecteur 12, des moyens d'insertion 13 du module 5 ainsi qu'une coque 14 de protection refermée, en son extrémité opposée à la partie de connexion 2, par un bouchon 15.

Le connecteur 12 se compose d'un ensemble d'au moins quatre pattes recourbées et alignées. Dans l'exemple exposé dans la présente description, le connecteur 12 comporte huit pattes métalliques alignées selon deux rangées de quatre pattes. Quatre pattes parmi les huit sont connectées électriquement chacune à une ligne de connexion. Une première patte 17 est connectée à la première ligne 8, une seconde patte 16 est connectée à la seconde ligne 9, une troisième patte 19 est connectée à la troisième ligne 10 et une quatrième patte 16 est connectée à la quatrième ligne 11. Les lignes 8 (GND) et 11 (Vbus) sont connectées entre elles par une capacité de découplage de l'ordre de 100 nF. Les autres pattes, c'est-à-dire les cinquième 20, sixième 21, septième 22 et huitième 23 pattes sont connectées ou non. Dans le cas où elles sont connectées, elles peuvent l'être à un élément de conversion de protocole ISO/USB 24 et/ou à un élément d'horloge 25, par exemple, un élément de quartz, lesdits éléments étant schématisés à la figure 3.

Les moyens d'insertion 13 se présentent sous la forme d'un ensemble de deux feuillures 26 opposées formant une glissière pour l'insertion du module 5 le long de sa tranche. Ces feuillures 26 dirigent le module 5 en position de connexion électrique au connecteur 12.

La coque de protection 14 est une coque plastique, par exemple moulée, qui recouvre le connecteur 12 et de la partie d'insertion 13. Le bouchon 15, qui referme cette coque 14, est avantageusement apte à bloquer le module 5 en position insérée de connexion dans le lecteur 1.

Ainsi que cela est plus particulièrement montré à la figure 1, ce module 5 se compose d'un corps de module 27 plastique dans lequel est noyé une puce à circuit intégré connectée, par des moyens de connexion, à des plages de contact 28 affleurantes à la surface dudit module 5.

Le corps du module 5 se présente sous la forme d'un parallélépipède rectangle dont les dimensions sont de l'ordre des suivantes : 25 mm de longueur, 15 mm de largeur et 0,76 mm d'épaisseur. Ces dimensions, normalisées, sont définies notamment en annexe A de la norme ETSI/GSM 11.11 dans sa version 5.3.0 de juillet et 1996.

La puce à circuit intégré, non représentée sur les dessins, comporte différents élément fonctionnels dont des mémoires RAM, ROM et EEPROM et une unité centrale de traitement CPU qui gère, par l'intermédiaire de bus de données et d'adresses, des données généralement confidentielles. De telles données sont par exemple des données d'identification du titulaire du module, des clés publiques ou privées de cryptage, des algorithmes de codage, des programmes applicatifs, ou des mots de passe. Par ailleurs, la puce comporte au moins les quatre plots de contact suivants : Vcc pour l'alimentation en tension de la puce, GND pour la mise à la masse, D+ et D- pour la transmission des données selon la norme précitée USB. D'autres plots de contact peuvent être présents, par exemple, les plots CLK pour l'entrée d'un signal d'horloge, I/O pour l'entrée et la sortie des données selon les protocoles prévus par les normes ISO7816 et Vpp pour l'alimentation en tension de programmation.

Le nombre et la position des plages de contact 28 du module 5 sont normalisés dans la norme ISO7816 précitée.

En définitive, les lecteurs selon l'invention, qui sont des dispositifs conformes à la norme USB, ne comportent, à l'exception des éléments éventuels 24 et 25, aucune électronique. Leur coût de fabrication est donc particulièrement faible.

Lorsqu'un utilisateur, qui a acquis un lecteur 1 selon l'invention pour un coût modique, et qui dispose d'un ou de plusieurs ordinateurs personnels munis de ports 3 adéquats pour une connexion dudit lecteur 1, souhaite utiliser ce lecteur 1, il doit acquérir un module 5 électronique. Un tel module 5 est généralement commercialisé sous la forme d'une carte au format dit ISO, c'est-à-dire sous la forme d'une carte 29 sensiblement parallélépipédique et rectangle dont la longueur est de l'ordre de 85 mm, la largeur est de l'ordre de 54 mm et l'épaisseur de l'ordre de 0,76 mm, qui comporte une prédécoupe à la forme du module 5.

L'utilisateur doit alors détacher le module 5 de son support carte et l'insérer de manière amovible dans la partie d'insertion 13 du lecteur 1. A cet effet, l'utilisateur retire le bouchon 15 et insère le module 5 le long des feuillures 26 formant une glissière. Une fois inséré, les pattes de contact du lecteur 1 viennent au contact des plages de contact 28 du module qui leur sont respectivement associées. L'utilisateur referme alors le bouchon 15.

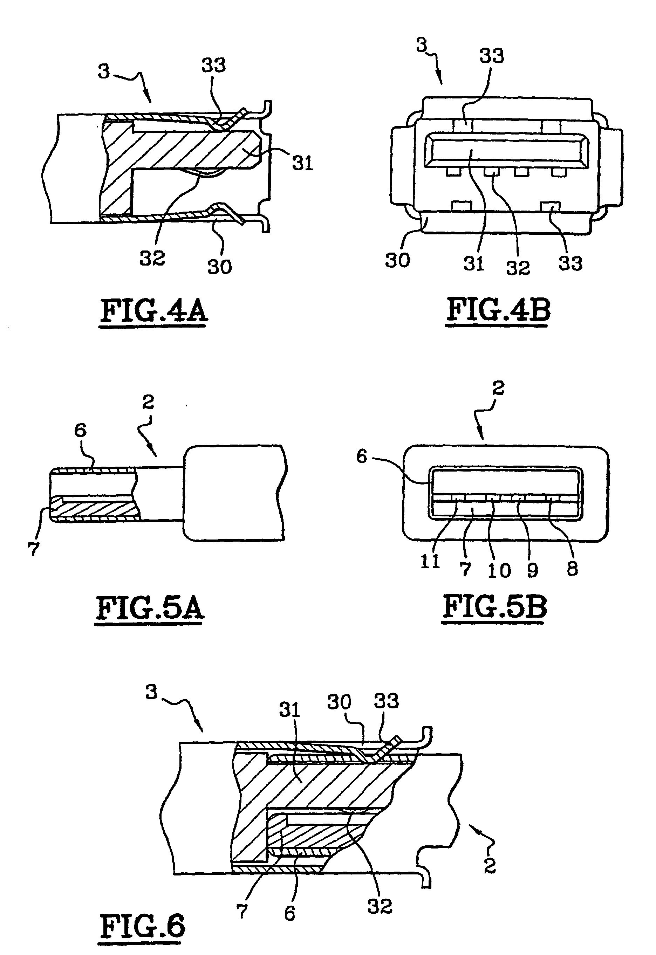

Puis, l'utilisateur connecte le lecteur à un port 3 d'un ordinateur, c'est-à-dire un port faisant partie intégrante de l'unité centrale dudit ordinateur ou faisant partie d'un répartiteur connecté, par un câble, à ladite unité centrale. Un tel port est montré aux figures 4 et 5. Il s'agit d'un port décrit par la norme USB précitée. Il comporte un embout 30 plastique comprenant une partie 31 de connexion en saillie. Quatre pattes 32 de connexion électrique sont fixées à ladite partie 31. Quatre lames 33 de blocage sont par ailleurs fixées à l'embout 30. La connexion est montrée à la figure 6.

Lorsque le lecteur est connecté et que l'ordinateur est sous tension, cet ordinateur détecte la présence du lecteur 1 et des données peuvent être échangées entre la puce du module 5 inséré dans le lecteur 1 et l'ordinateur, via le système de bus USB. Les protocoles d'échange de données sont décrits dans la norme USB précitée. Les débits des données échangées sont, conformément à cette norme, de 1,5 Mbit/s ou de 12 Mbit/s.

Aussi, des programmes peuvent être exécutés de manière sécurisée dans la puce en vue de traiter des données transmises par l'ordinateur. Par exemple, des algorithmes présents dans les mémoires de la puce du module peuvent être utilisés pour coder des données à la volée transmises par l'ordinateur et destinées à être transmises sur un réseau tel que l'internet. Le module peut par ailleurs comporter tous les mots de passe ou clés d'identification de l'utilisateur et celui ci n'a plus qu'à aller les chercher si besoin, dans la mémoire sécurisée du module.

Si l'utilisateur ne souhaite plus se servir de l'ordinateur, il peut déconnecter le lecteur et l'emporter avec lui. Si l'utilisateur, veut se servir de ses mots de passe ou autres informations confidentielles à partir d'un autre ordinateur, il suffit qu'il connecte le lecteur de l'invention, à cet autre ordinateur.

Il peut par ailleurs retirer le module du lecteur et l'insérer par exemple, dans son téléphone mobile, pour une utilisation des données dudit module, avec ledit téléphone. Ainsi, dans le cas où des données de la mémoire du module sont destinées à la mémorisation de courriers électroniques, ces courriers peuvent être obtenus au moyen d'un téléphone mobile ou, au choix, d'un ordinateur personnel.

## Revendications

1. Lecteur portatif (1), **caractérisé en ce qu'**il comporte quatre lignes de connexion électrique (8,9,10,11) pour être électriquement connectées à un port (3) d'ordinateur et une partie (4) pour insérer un module (5) apte à mémoriser des informations confidentielles, le module comprenant, d'une part, un corps (27) de module plastique sensiblement parallélépipédique rectangle dont les dimensions sont de l'ordre de 25mm de longueur, 15mm de largeur et 0,76 mm d'épaisseur, et d'autre part, une puce à circuit intégré munie de plots de contact connectés électriquement à des plages de contact (28) affleurantes à l'une des faces dudit module (5), ladite partie (4) du lecteur portatif comportant des contacts qui sont électriquement connectés aux quatre lignes de connexion électrique (8,9,10,11) du lecteur (1) et, lorsque le module (5) est inséré dans ledit lecteur portatif (1), aux plages de contact (28) dudit module (5).

2. Lecteur (1) selon la revendication 1, **caractérisé en ce que** le lecteur (1) s'inscrit dans un parallélépipède rectangle dont les dimensions, longueur, largeur et hauteur, sont respectivement de l'ordre de 5, 3 et 2cm.

3. Lecteur (1) selon la revendication 1, **caractérisé en ce que** le lecteur constitue un dispositif conforme à la norme USB.

4. Lecteur (1) selon la revendication 1, **caractérisé en ce que** le lecteur est associé à un porte-clés.

5. Procédé de gestion de données confidentielles mémorisées dans une mémoire sécurisée d'un module (5) comprenant, d'une part, un corps (27) de module plastique sensiblement parallélépipédique rectangle dont les dimensions sont de l'ordre de 25mm de longueur, 15 mm de largeur et 0,76 mm d'épaisseur et, d'autre part, une puce à circuit intégré munie de plots de contact connectés électriquement à des plages de contact (28) affleurantes à l'une des faces dudit module (5), selon lequel :
- le module (5) est inséré dans une partie (4) d'un lecteur portatif (1) qui comprend quatre lignes de connexion électrique (8,9,10,11) pour être électriquement connectées à un port (3) d'ordinateur, le module étant inséré de manière à ce que lesdites plages de contacts du module soient électriquement connectées à des contacts dans ladite partie du lecteur portatif, les contacts étant électriquement connectés aux quatre lignes de connexion électrique du lecteur portatif ;
- un utilisateur connecte le lecteur (1) à un port (3) d'un premier ordinateur ;
- des données sont échangées entre la puce à circuit intégré située dans le module (5) et le premier ordinateur ;
- l'utilisateur déconnecte le lecteur (1) du port (3) du premier ordinateur ;
- l'utilisateur emporte le lecteur (1) avec lui/elle ;
- l'utilisateur connecte le lecteur (1) à un port (3) d'un second ordinateur.

6. Procédé selon la revendication 5, **caractérisé en ce que** le premier et le second ordinateur sont un seul et même ordinateur.

7. Procédé selon la revendication 5, **caractérisé en ce que** le premier ordinateur est différent du second ordinateur.

8. Procédé selon la revendication 5, **caractérisé en ce que** les données sont échangées via un système de bus USB.

9. Procédé selon la revendication 5, **caractérisé en ce que** l'utilisateur retire le module (5) du lecteur (1) et l'insère dans un téléphone mobile.

## Claims

1. A portable reader (1), **characterized in that** the portable reader comprises four electrical connection lines (8, 9, 10, 11) to be electrically connected to a computer port (3), as well as a portion (4) for inserting a module (5) arranged to store confidential information, the module comprising, on the one hand, a plastic module body (27) having a substantially parallelepipedal rectangular shape with dimensions of the order of 25 mm in length, 15 mm in width and 0.76 mm in thickness and, on the other hand, an integrated circuit chip provided with contact terminals electrically connected to contact pads (28) that are flush with one of the faces of said module (5), said portion (4) of the portable reader (1) comprising pads that are electrically connected to the four electrical connection lines (8, 9, 10, 11) of the reader (1) and, when the module (5) is inserted into said portable reader (1), to the contact pads (28) of said module (5).

2. Reader (1) according to claim 1, **characterized in that** the reader is inscribed within a rectangular parallelepiped having length, width and height dimensions, of about 5, 3 and 2 cm, respectively.

3. Reader (1) according to claim 1, **characterized in that** the reader constitutes a device according to the USB standard.

4. Reader (1) according to claim 1, **characterized in that** the reader is combined with a key ring.

5. Method of managing confidential data stored within a secure memory of a module 5, comprising, on the one hand, a plastic module body (27) of substantially parallelepipedal and rectangular shape, the dimensions of which are about 25 mm in length, 15 mm in width and 0.76 mm in thickness and, on the other hand, an integrated circuit chip provided with contact terminals electrically connected to contact pads (28) that are flush with one of the faces of said module (5), in which:
- the module (5) is inserted into a portion (4) of a portable reader (1) that comprises four electrical connection lines (8, 9, 10, 11) to be electrically connected to a computer port (3), the module being inserted so that said contact pads of the module are electrically connected to pads in said portion of the portable reader, the pads being electrically connected to the four electrical connection lines of the portable reader;
- a user connects the reader (1) to a port (3) of a first computer;
- data are exchanged between the integrated circuit chip located in the module (5) and the first computer;
- the user disconnects the reader (1) from the port (3) of the first computer;
- the user takes the reader (1) with him/her;
- the user connects the reader (1) to a port (3) of a second computer.

6. Method according to claim 5, **characterized in that** the first and second computers are one and the same computer.

7. Method according to claim 5, **characterized in that** the first computer is different from the second computer.

8. Method according to claim 5, **characterized in that** the data are exchanged via a USB bus system.

9. Method according to claim 5, **characterized in that** the user withdraws the module (5) from the reader (1) and inserts it into a mobile phone.

## Patentansprüche

1. Portabler Leser (1), **dadurch gekennzeichnet, dass** er vier elektrische Anschlussleitungen (8, 9, 10, 11) enthält für den elektrischen Anschluss an einen Computer-Port (3) und einen Teil (4) zur Einführung eines Moduls (5), welches vertrauliche Informationen speichern kann, wobei das Modul einerseits aus einem merklich parallelepipedischen rechteckigen Modul-Kunststoffgehäuse (27) mit 25 mm Länge, 15 mm Breite und 0,76 mm Dicke besteht und andererseits einem Chip mit integrierter Schaltung, welcher mit Kontaktstücken versehen ist, die elektrisch an Kontaktbereiche (28), die eine der Flächen des besagten Moduls (5) berühren, angeschlossen sind, wobei besagter Teil (4) des portablen Lesers Kontakte hat, die elektrisch an die vier elektrischen Anschlussleitungen (8, 9, 10, 11) des Lesers (1) angeschlossen sind und - sobald das Modul (5) in den besagten portablen Leser (1) eingesteckt ist - an die Kontaktbereiche (28) des besagten Moduls (5).

2. Leser (1) gemäss Patentanspruch 1, **dadurch gekennzeichnet, dass** der Leser (1) ein Teil eines rechteckigen Parallelepipeds ist, dessen Abmessungen - Länge, Breite und Höhe - jeweils 5, 3 und 2 cm betragen.

3. Leser (1) gemäss Patentanspruch 1, **dadurch gekennzeichnet, dass** der Leser eine Vorrichtung nach Norm USB bildet.

4. Leser (1) gemäss Patentanspruch 1, **dadurch gekennzeichnet, dass** der Leser einem Schlüsselanhänger zugeordnet wird.

5. Verfahren zur Verwaltung vertraulicher Daten, die in einem sicheren Speicher eines Moduls (5) gespeichert sind, einerseits bestehend aus einem merklich parallelepipedischen rechteckigen Modulgehäuse (27) aus Kunststoff mit 25 mm Länge, 15 mm Breite und 0,76 mm Dicke und andererseits einem Chip mit integrierter Schaltung, welcher mit Kontaktstücken versehen ist, die elektrisch an Kontaktbereiche (28), die eine der Flächen des besagten Moduls (5) berühren, angeschlossen sind, gemäss welchem:
- das Modul (5) in einen Teil (4) eines portablen Lesers (1) eingesteckt wird, welches vier elektrische Anschlussleitungen (8, 9, 10, 11) für den elektrischen Anschluss an einen Computer-Port (3) umfasst, wobei das Modul so eingesteckt wird, dass besagte Kontaktbereiche des Moduls elektrisch mit Kontakten im besagten Teil des portablen Lesers verbunden sind und die Kontakte elektrisch mit den vier elektrischen Anschlussleitungen des portablen Lesers verbunden sind;
- ein Benutzer den Leser (1) an einen Port (3) eines ersten Computers anschließt;
- Daten zwischen dem im Modul (5) befindlichen Chip mit integrierter Schaltung und dem ersten Computer ausgetauscht werden;
- der Benutzer den Leser (1) vom Port (3) des ersten Computers löst;
- der Benutzer den Leser (1) mitnimmt;
- der Benutzer den Leser (1) an einen Port (3) eines zweiten Computers anschließt.

6. Verfahren gemäss Patentanspruch 5, **dadurch gekennzeichnet, dass** der erste und zweite Computer ein und derselbe Computer sind.

7. Verfahren gemäss Patentanspruch 5, **dadurch gekennzeichnet, dass** sich der erste Computer vom zweiten Computer unterscheidet.

8. Verfahren gemäss Patentanspruch 5, **dadurch gekennzeichnet, dass** die Daten über ein USB-Bus-System ausgetauscht werden.

9. Verfahren gemäss Patentanspruch 5, **dadurch gekennzeichnet, dass** der Benutzer das Modul (5) des Lesers (1) löst und es in ein Mobiltelefon einsteckt.
